# EUROPEAN PATENT SPECIFICATION

(11) **EP 1 404 789 B1**
(45) Date of publication and mention of the grant of the patent: **07.03.2007**
(21) Application number: 02743491.9
(22) Date of filing: 09.07.2002
(51) Int. Cl.: C11C 3/00, H05B 6/80, C10L 1/00

(54) **PROCESSES AND DEVICES FOR IMPROVING THE REACTIVITY OF NATURAL TRIGLYCERIDES WITH MICROWAVE RADIATION**
VERFAHREN UND GERÄTE ZUR VERBESSERUNG DER REAKTIVITÄT VON NATÜRLICHEN TRIGLYCERIDEN DURCH MIKROWELLENBESTRAHLUNG
PROCEDES ET DISPOSITIFS DESTINES A AMELIORER LA REACTIVITE DE TRIGLYCERIDES NATURELS AU MOYEN D'UN RAYONNEMENT MICRO-ONDES

(30) Priority: 09.07.2001 IT BO20010429
(43) Date of publication of application: 07.04.2004
(73) Proprietor: Siticsa srl, 63023 Fermo AP (IT)
(72) Inventor: BRECCIA FRATADOCCHI, Alberto, 40141 Bologna (IT)
(74) Representative: Lanzoni, Luciano
(86) International application number: PCT/IB2002/002670
(87) International publication number: WO 2003/014272

(56) References cited:
- EP-A- 0 021 242
- EP-A- 1 018 856
- DASGUPTA, A, BANERJEE, P., AND MALIK, S.: "Use of microwave irradiation for rapid transesterification of lipids and accelerated synthesis of fatty acyl pyrrolidides for analysis by gas chromatography-mass spectrometry: study of fatty acid profiles of olive oil, evening promrose oil, fish oils and phospholipids from mango pulp." CHEMISTRY AND PHYSICS OF LIPIDS., vol. 62, 1992, pages 281-291, XP008011233 LIMERICK, IR ISSN: 0009-3084
- BANERJEE, P., DAWSON, G. AND DASGUPTA, A. : "Enrichment of saturated fatty acid containing phopholipids in sheep brain serotonin receptor preparations: use of microwave irradiation for rapid transesterification of phospholipids" BIOCHIMICA ET BIOPHYSICA ACTA., vol. 1110, 1992, pages 65-74, XP008011434 AMSTERDAM, NL ISSN: 0006-3002
- KHAN, M. U., AND WILLIAMS, J. P. : "Microwave-mediated methanolysis of lipids and activation of thin-layer chromatographic plates" LIPIDS, vol. 28, no. 10, 1993, pages 953-955, XP008011436 CHAMPAIGN, IL, US ISSN: 0024-4201
- VACEK, M., ZAREVUCKA, M., WIMMER, Z., STARSKY, K., DEMNEROVA, K., AND LEGOY, M-D.: "Selective enzymic esterification of free fatty acids with n-butanol under microwave irradiation and under classical heating" BIOTECHNOLOGY LETTERS, vol. 22, 2000, pages 1565-1570, XP008011232 KEW, SURREY, GB ISSN: 0141-5492
- POLLINGTON, S. D., BOND, G., MOYES, R. B., WHAN, D. A., CANDLIN, J. P., AND JENNINGS, J. R.: "The influence of microwaves on the rate of reaction of Propan-1-ol with Ethanoic acid" JOURNAL OF ORGANIC CHEMISTRY, vol. 56, 1991, pages 1313-1314, XP002225241

## Description

### Technical Field

The present invention relates to laboratory and industrial processes and devices for preparing methyl esters from natural fats with the action of microwaves. These processes and devices can be set up to function at any frequency in the microwave sector and can preferably function with microwaves with a frequency of 2450 MHz and even microwaves with a frequency of 900 MHz.

### Background Art

It is known that microwave radiation induces an increase in hydrolysing speed in derivatives of nitroimidazoles and indomethacin and other organic compounds of synthesis.

It is also known that microwave radiation induces polarisation in substances with high dielectric properties, of around 2.45x109 times per second, creatinga"molecular friction"which produces strong heating in the chemical system subjected to their action. On this subject, consult the reference publication incorporated herein, by E. Gattavecchia,I. Giovanardientitled"Kinetic effects of microwaves in indomethacinhydrolysis"in the"Microwave and High Frequency Heating1997"conference-Fermo (Italy), 7-11 September 1997. An example of a process for preparing biological fuels using microwave radiation is given by Dasgupta, A, Banerjee, P., and Malik, S.: "Use of microwave irradiation for rapid transesterification of lipids and accelerated synthesis of fatty acyl pyrrolidides for analysis by gas chromatograpy-mass spectrometry: stdy of fatty acid profiles of olive oil, evening promrose oil, fish oils and phospholipids from mango pulp", Chemistry and Physics of Lipids, vol. 62, 1992.

### Disclosure of the Invention

The aim of the present invention is to provide laboratory and industrial processes for the methyl esterification of natural fatty acids present in seed oils, fruit, plants and other vegetable systems of rape, maize, grape-seeds, sunflower, soya, etc., to produce a biological fuel, known to experts in the field as "biodiesel".

The present invention also relates to innovative devices for producing the above-mentioned processes based on the development of the afore-said properties of microwaves and on the different power of microwaves to modulate the reaction times and temperatures.

A further aim of the present invention is to provide a new esterification process, with new catalysts, for natural fatty acids, such as oleic, linoleic, arachidic, stearic etc. acids which works rapidly and without the presence of inorganic acids.

An advantage of the present invention is that it greatly speeds up the hydrolysis and esterification processes, reducing them to around one quarter of the time required by the conventional laboratory process (from 45 minutes to under 10 minutes) and to less than a third of that of the conventional industrial process (from 90 minutes to 30 minutes), at the same time reducing the quantity of methanol to just over the stoichiometric quantity as against the 200% of the stoichiometric quantity in excess required with conventional processes.

### Brief Description of the Drawings

The embodiments of the present invention are illustrated in the detailed description which follows, with reference to the accompanying drawings, which illustrate a preferred embodiment, without limiting the scope of its application, and in which:
Figure 1 is a schematic front view of a laboratory device for preparing methyl esters of natural fats in accordance with the present invention;
Figure 2 is a schematic front view of an industrial device for preparing methyl esters of natural fats in accordance with the present invention;
Figures 3 and 4 illustrate some details of the industrial device shown in Figure 2; and
Figure 5 is a schematic front view of another embodiment of the industrial device for preparing methyl esters of natural fats in accordance with the present invention.

### Detailed Description of the Preferred Embodiments of the Invention

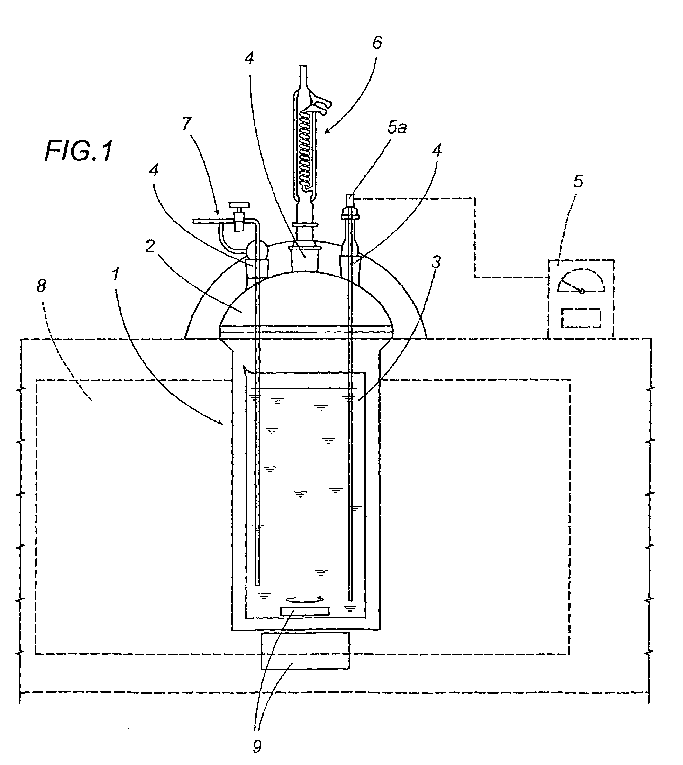

Figure 1 illustrates the Pyrex reactor 1, with a two litre volume, consisting of a lid 2 and a cylinder 3 with ground contact surface, held together by an adjustable steel hinge and a Teflon O-ring. The lid has three ground cones 4 for inserting the thermometer and thermostat 5, with thermocouple 5a, for measuring and controlling the temperature. If the temperature increases too much, the thermostat switches off the magnetron. There is a reflux condenser 6 with wide working opening at the base, advantageous for the considerable evaporation of the methanol. There is a drawing tube 7 for sampling the reaction mixture whose kinetic trend is controlled. Inside the cylinder 3 there is also an agitator 9 for promoting the remixing and distribution of microwaves in the oily content. The agitator is of the magnetic type, that is to say, of the type comprising an agitator element made of ferromagnetic material, positioned inside the cylinder 3, which is magnetically drawn in a rotary motion by a device outside the cylinder 3.

The cylindrical part is positioned inside the microwave oven 8, illustrated as a whole in Figure 1.

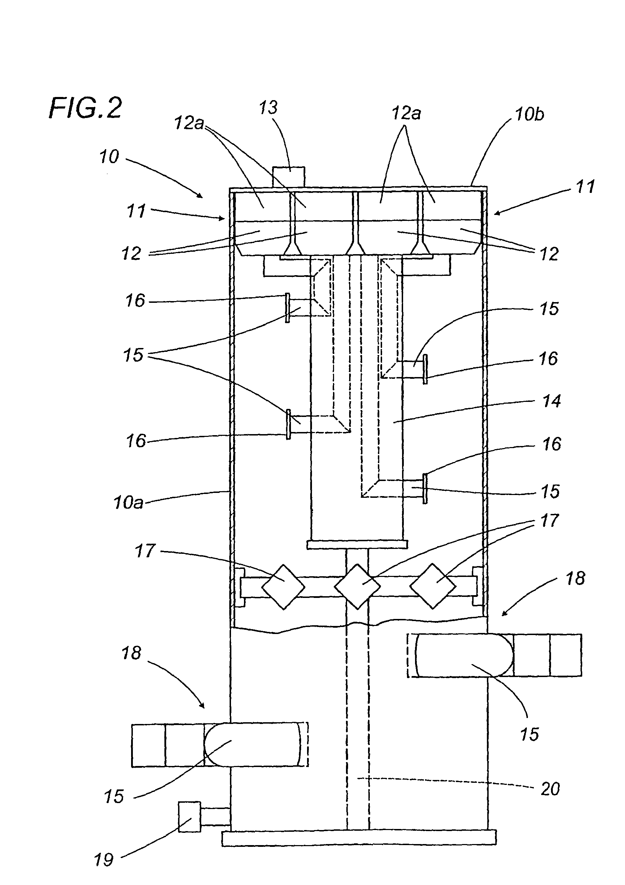

Figure 2 shows a new model microwave reactor 10 for industrial cycles.

In a preferred embodiment of the present invention, without limiting the scope of application, the reactor consists of a container 10a, in the form of a steel cylinder with a diameter of around 60 cm and a height of around 140 cm, measurements which may vary, with the top closed by a lid 10b, also made of steel, on which microwave generators 11 are rested, the latter comprising the magnetrons 12, transformers 12a, and the air or water cooling device and an oil filler cap 13.

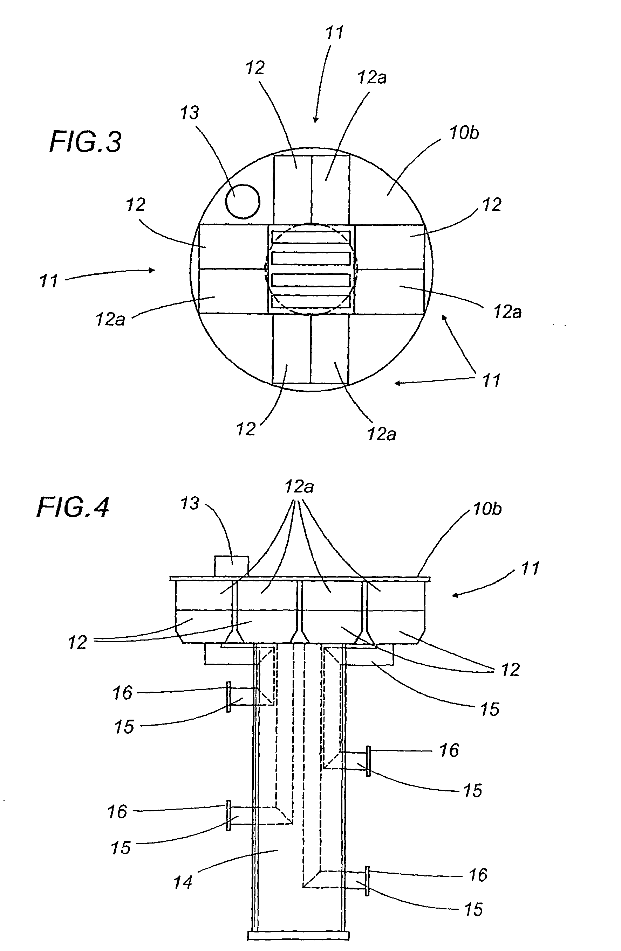

From the lid 10b there extends an original rectangular central case 14, better illustrated in Figures 3 and 4, housing the wave guides 15 which, starting from the magnetron 12 windows, direct the band of microwaves to predetermined positions in the container cylinder 10a. The positioning of the wave guides 15 is not rigid, but depends on the oil content to be transformed into biodiesel.

The lower part of the cylinder holds another two microwave generators 18 for parallel and converging waves, with wave guides 15 and made in accordance with RIMM technology, described for example in patent application EP-1 018 856.

The wave guide 15 end windows 16 are made of quartz, mica, Teflon, or any other material transparent to microwaves. The irradiation from the centre to the edge of the generators 11 is certainly advantageous because the distance which must be covered by the band of microwave radiation is reduced.

The centre of the cylinder is fitted with actuator vanes 17 which rotate with a circular motion inside at a speed of 20-30 rpm. This advantageously distributes the microwaves in the oily content.

At the base of the cylinder is a well-placed outfeed hole 19 for the liquid treated, that is to say, the biological fuel ("biodiesel"). The cylinder 10a also holds a bar 20 supporting the wave guide container. The container 10a base may be removable for improved maintenance and easier reactor assembly.

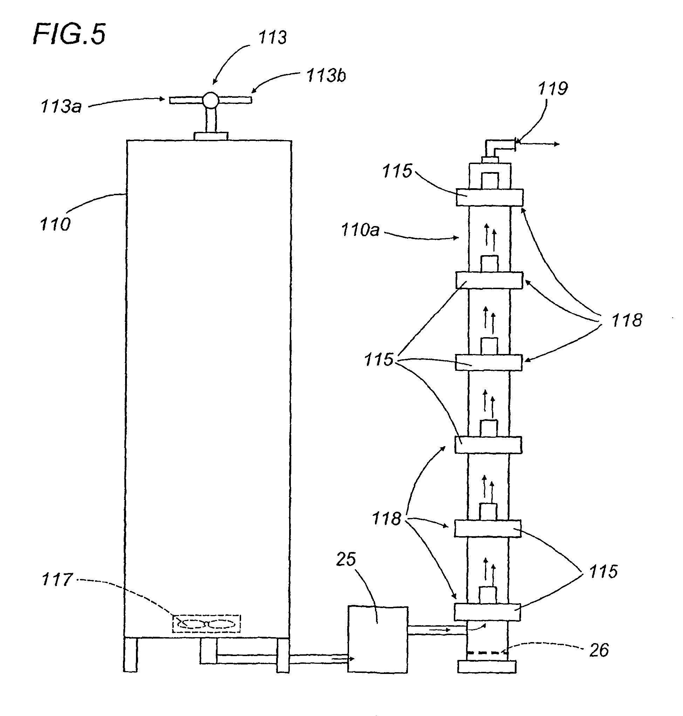

Figure 5 illustrates another embodiment of the present invention for the continuous production of biological fuel or biodiesel.

The device comprises a container 110 for initial mixing of the oils and reagents fed in through the infeed tap 113, respectively from the left-hand tube 113a and from the right-hand tube 113b.

The container 110 is preferably a steel cylinder with a diameter of around 40 cm and a height of around 120 cm.

The products are then remixed in the container 110, by a mechanical agitator 117, and transferred by a transfer pump 25 into an irradiation tube 110a.

The tube 110a contains microwave generators 118, also equipped with wave guides 115 and made in accordance with RIMM technology.

The irradiation tube 110a is preferably a steel cylinder with a diameter of around 8-10 cm and a height of around 120 cm. The product transit speed through the tube 110a is around 15-20 minutes. This time also corresponds to the time required for reaction with the microwaves.

The microwave generators 118 are around 20 cm from one another. These dimensions may vary and are optimised to give the reaction in the entire mixture in the times required.

At the base of the irradiation tube 110a there is a separation mesh 26 around 10 cm from the base. This mesh allows sodium glycerate to be deposited on the base without being drawn along by the other products in transit.

The outfeed tube 119 allows the continuous outfeed of products obtained from the reaction.

### Experimental part

The laboratory device was very advantageously used to carry out experiments on new hydrolysing and esterification processes for natural fatty acids with new catalysts, as well as microwaves, also used as a catalyst in hydrolysis.

Experimentation in particular on the hydrolysis and esterification of natural fatty acids in peanut and rape oils subject to microwaves was carried out in various chemical systems, as described below.

### Example I

400 ml of oleic acid was mixed with 5 g of CHO₃Na and 50 ml of CH₃OH.

The mixture was allowed to flow by agitating with magnets and part of it was sampled at predetermined times: 5', 10', 20', 30', 40', 60'

The temperatures were measured at the sampling times, as shown in Table I.

**Table I: Oleic acid esterification**

| Oleic acid esterification with CH₃OH + CH₃ONa | | | | |
|---|---|---|---|---|
| Sample | t (min) | Ester | Tₘₐₓ (C) | Notes |
| 1 oleic acid | 5 | B | 30°C | (residual CH₃OH) |
| 2 " | 15 | 800 | 50°C | " |
| 3 " | 30 | 900 | 62°C | " |
| 4 " | 40 | 1050 | 67°C | " |
| 5 " | 60 | 1150 | 70°C | (no residual CH₃OH) |

### Example II (comparative)

400 ml of oleic acid was mixed with 5 g of 60 ml of methanol. The methanol in excess of the stoichiometric quantity is required due to the high temperature reached under the microwaves.

The mixture was placed in a two-way flask in a suitably modified microwave cavity. A mechanical agitator and reflux condenser were inserted. The microwave power was 900 J.s⁻¹ (Watt). The temperatures reached at predetermined times were measured. The values measured are listed in Table II.

**Table II**

| Oleic acid esterification with microwaves CH₃OH | | | |
|---|---|---|---|
| Sample | times (min.) | Ester | Tₘₐₓ (C) |
| 6 oleic acid | 2' | 22 | 58°C |
| 7 " | 5' | 34 | 68°C |
| 8 " | 10' | 54 | 82°C |

### Example III (comparative)

250 ml of oleic acid was mixed with 100 g of montmorillonite (a catalyst) and 100 ml of CH₃OH and placed in a flask, then in a microwave oven.

Samples were taken at the times indicated and the temperatures were measured. The relative data appears in Table III.

The traditional process of methyl esterification of fatty acids in the form of glycerides is considered a transesterification since it involves the simultaneous hydrolysis of glyceride esters (glycerol - fatty acids) and the further esterification of the acids freed with methanol using sodium methylate as the catalyst. With microwave radiation the process is well-defined in two parts:
a) the very rapid hydrolysis of the glycerides by the microwaves with formation of a highly reactive intermediate product

   *R-CH=CH-CH=C-CH₂-CO^{•}*
b) reaction of the intermediate product with CH₃O⁻
c) methylate reaction with the reactive intermediate product
d) sodium methylate restored with CH₃OH+Na⁺ and formation of glycerol.

This mechanism is confirmed by the fact that under the action of microwaves free oleic acid is not esterified except with the addition of a catalyst (montmorillonite) and even in this case the process is very slow.

**Table III**

| Oleic acid esterification with microwaves +CH₃OH and montmorillonite | | | |
|---|---|---|---|
| Sample | times (min.) | Ester | Tₘₐₓ (C) |
| 9 " | 2' | 55 | 60°C |
| 10 " | 5' | 155 | 64°C |
| 11 " | 10' | 308 | 74°C |

### Example V

The Na⁺ ion is required. The same reaction described in example I occurs rapidly even if the sodium methylate is substituted with NaOH, which with methyl alcohol forms CH₃ONa, since the CH₃O⁻ ion from CH₃ONa is needed, as indicated in Table IV.

**Table IV: Peanut oil esterification**

| Traditional process CH₂ONa+CH₃OH (comparative) | | | |
|---|---|---|---|
| Sample | t (min) | Ester⁺ | Tₘₐₓ (C) |
| 1 peanut oil | 5' | 605 | 20°C |
| 2 " | 10' | 891 | 38°C |
| 3 " | 20' | 898 | 48°C |
| 4 " | 30' | 1180 | 65°C |
| 5 " | 45' | 1617 | 66°C |
| 6 " | 60 | 1780 | 74°C |

These reactions must be accompanied by a temperature control and an excess of CH₃OH, as indicated in table V, otherwise polymerisation begins after a short time (>15').

**Table V**

| Esterification with microwaves + *CH₃ONa+CH₃OH* (invention) | | | |
|---|---|---|---|
| 8 "peanut oil | 2'min | 680 ester | 62°C |
| 9 " | 5' | 910 | 65°C |
| 10 " | 10' | 1810 | 68°C |
| 11 " | 15' | 1700 | 88-92°C |
| 12 " | 20= | 1200 | 160°C |

| | | | |
|---|---|---|---|
| N.B.: Esters such as oleic acid. | | | |

The following examples V-VII are also comparative.

### Example V

Using the same reaction as in example I, Table VI shows very strong transesterification kinetics in the presence of Al₂O₃. The data appears in table VI.

**Table VI:**

| Peanut oil esterification with microwaves and other catalysts | | | | | |
|---|---|---|---|---|---|
| Sample | t (min) | ester | Tₘₐₓ | catalyst | Microwaves |
| 4 | 5' | 213 | 70°C | Al₂O₃ neutral | Microwaves |
| 5 | 10' | 970 | 85°C | " | " |
| 6 | 20' | 1370 | 130°C | " | "(addition of CH₃OH) |

### Example VI

There is also a significant increase in the temperature of the peanut oil in just a few minutes in the presence of tungsten boride, methanol and microwaves above 300°C with solidification and the formation of dimers and polymers. The data appears in table VII.

**Table VII:**

| Peanut oil esterification with microwaves and other catalysts | | | | | |
|---|---|---|---|---|---|
| Sample | t (min) | ester | Tₘₐₓ | Catalyst | microwaves |
| | | | | Tungsten boride⁽¹⁾ | microwaves |
| 1 | 1 min | - | 184°C | " | " |
| 2 | 2 | 13(oleic) 31(linoleic) | 190°C | " | " |
| 3 | 3 | - | >300°C | "formation of longer chains | " |
| 4 | 5' | 0.3 | 72°C | Tungsten boride | microwaves |
| 5 | 10' | 0.5 | 84°C | " | |
| 6 | 20' | 4.2 | 88°C | " | |
| 7 | 30' | - | >100°C | "formation of longer chains=polymers | |

### Example VII

A further esterification was performed in the mixture referred to in example I in two stages, subject to microwaves, to highlight the effect of other catalysts, such as boron carbide and silicon carbide. The data appears in Table VIII.

**Table VIII:**

| Peanut oil esterification with microwaves and other catalysts | | | | | |
|---|---|---|---|---|---|
| Sample | t (min) | Ester | Tₘₐₓ | Catalyst | microwaves |
| 1 | 5' | 1 | 72°C | boron carbide | microwaves |
| 2 | 10' | 2.5 | 85°C | " | " |
| 3 | 5' | 1.8 | 83°C | silicon carbide | " |
| 4 | 10' | 0.3 | 105°C | " | |

### Example VIII

250 ml of rape oil was mixed with 50 ml of methanol and subjected to microwaves with reflux for 3 minutes (max. temperature 88°C).

2.5 g of sodium methylate was then added to the mixture and it was subjected to traditional heating.

At predetermined times (3-10-20-30 min.) 10 ml of the mixture was sampled for gas chromatography analysis and to follow the temperature. The data is recorded in table IX.

**Table IX**

| Time (minutes) | CH₃ONa | CH₃OH | gas chro area | T°C | Microwaves |
|---|---|---|---|---|---|
| 3 | no | 50 ml | = | 78° | yes |
| 10 | 2.5 g | " | 208 | 88° | yes |
| 20 | " | " | 740 | 92° | yes |
| 30 | " | " | 940 | 98° | yes |

## Claims

1. A process for preparing biological fuels starting with at least one natural fatty acid, comprising steps of:
placing at least one natural fatty acid, methanol and a catalyst in a container (1; 10; 110) to obtain a reaction mixture;
irradiating the reaction mixture previously obtained with microwaves
the process being **characterised in that** said catalyst is sodium methylate and **in that** said microwave irradiation step causes the formation of reactive radicals as intermediate products; and **in that** said reactive radicals are esterified to form said biological fuels.

2. The process according to claim 1, **characterised in that** the natural fatty acid is selected from natural glycerides.

3. The process according to claim 2, **characterised in that**, before the esterification step, it comprises a step of hydrolysing the natural fatty acid by irradiation with microwaves and with the formation of active intermediate products obtained from the glycerides and from the catalyst.

4. The process according to any of the foregoing claims, **characterised in that** the catalyst further comprises a substance selected from the group formed by aluminium oxide, acid alumina and sodium.

5. The process according to any of the foregoing claims, **characterised in that** the natural fatty acid is peanut oil.

6. The process according to claim 1, **characterised in that** the natural fatty acid is a free fatty acid.

7. The process according to claim 6, **characterised in that** the catalyst is a basic montmorillonite.

8. The process according to any of the foregoing claims, **characterised in that** the natural fatty acid and methanol are placed in a container (110) continuously.

9. The process according to claim 8, **characterised in that** the step of irradiating the reaction mixture previously obtained with microwaves takes place in a tube (110a) while the reaction mixture is in transit.

10. The process according to claim 8 or 9, **characterised in that** the products obtained, biological fuel is fed out continuously.

11. The process according to claim 9, **characterised in that** the step of irradiating the reaction mixture with microwaves is achieved using microwave generators (18) for parallel and converging waves, the generators having wave guides (15) and being made in accordance with RIMM technology.

12. A device for preparing biological fuels starting with a natural fatty acid and methanol, comprising:
a container (1; 10; 110) in which the natural fatty acid, methanol and sodium methylate are placed for obtaining a mixture;
at least one microwave generator (11, 18), with wave guide (15) for irradiating the mixture;
**characterised in that** the container is a reflux condenser.

13. The device according to claim 12, **characterised in that** it comprises agitator means (9; 17; 117) to promote product mixing in the container (1; 10; 110) and for more even irradiation.

14. The device according to claim 12, **characterised in that** it comprises a drawing tube (7) for continuously sampling the liquid in order to control the reaction.

15. The device according to claim 12, **characterised in that** it comprises a reaction temperature gauge (5, 5a) which is, in turn, a thermostat operating on at least one microwave generator (11, 18) so as to switch it off if the temperature becomes too high.

16. The device according to claim 12, **characterised in that** it comprises a reflux condenser (6) with wide opening for the considerable flow of methanol vapour produced by the microwaves.

17. The device according to claim 12, **characterised in that** the container (10) comprises a cylinder (10a) and a lid (10b) at the top of the container (10).

18. The device according to claim 17, **characterised in that** the lid (10b) comprises an opening (13) for the infeed of products for the reaction and the microwave generators (11).

19. The device according to claim 17, **characterised in that** on the base of the container (10) there is a hole (19) for the outfeed of the products treated.

20. The device according to claim 18, **characterised in that** the microwave generators (11) comprise wave guides (15, 16) with the outfeed angled towards the edge of the container (10) and positioned in a central case (14) extending from the lid (10b), allowing irradiation from the centre of the container (10) towards the outer edge with a more homogeneous microwave penetration of the products.

21. The device according to any of the claims from 12 to 20, **characterised in that** the lower half of the container (10) comprises at least one microwave generator (18) with semi-circular wave guides, being made in accordance with RIMM technology for improved microwave power.

22. The device according to claim 12, **characterised in that**, after the container (110), it comprises an irradiation tube (110a) in which the reagents are continuously in transit and in which there are microwave generators (118), the latter having wave guides (115) and made in accordance with RIMM technology.

23. The device according to claim 22, **characterised in that** it comprises a pump (25) for continuously transferring the reagents from the container (110) to the irradiation tube (110a).

## Patentansprüche

1. Verfahren zur Herstellung von biologischen Kraftstoffen ausgehend von mindestens einer natürlichen Fettsäure, umfassend die folgenden Schritte:
Einlegen mindestens einer natürlichen Fettsäure, Methanol und eines Katalysators in einen Behälter (1; 10, 110) zum Erhalten eines Reaktionsgemisches;
Bestrahlung des zuvor erhaltenen Reaktionsgemisches mit Mikrowellen,
wobei das Verfahren **dadurch gekennzeichnet ist, daß** der Katalysator Natriummethylat ist, und daß der Mikrowellenbestrahlungsschritt zur Bildung von reaktiven Resten als Zwischenprodukte führt; und daß die reaktiven Resten zur Bildung der biologischen Kraftstoffen verestert werden.

2. Verfahren nach Anspruch 1, **dadurch gekennzeichnet, daß** die natürliche Fettsäure aus natürlichen Glyzeriden ausgewählt wird.

3. Verfahren nach Anspruch 2, **dadurch gekennzeichnet, daß** es vor dem Veresterungsschritt einen Schritt von Hydrolysierung der natürlichen Fettsäure durch Bestrahlung mit Mikrowellen und mit der Bildung von ausgehend von den Glyzeriden und von dem Katalysator erhaltenen aktiven Zwischenprodukten umfasst.

4. Verfahren nach irgendeinem der vorherigen Ansprüche, **dadurch gekennzeichnet, daß** der Katalysator einen Stoff weiter umfasst, der aus der Gruppe umfassend Aluminiumoxid, säure Tonerde und Natrium ausgewählt wird.

5. Verfahren nach irgendeinem der vorherigen Ansprüche, **dadurch gekennzeichnet, daß** die natürliche Fettsäure Erdnussöl ist.

6. Verfahren nach Anspruch 1, **dadurch gekennzeichnet, daß** die natürliche Fettsäure eine freie Fettsäure ist.

7. Verfahren nach Anspruch 6, **dadurch gekennzeichnet, daß** der Katalysator ein basischer Montmorillonit ist.

8. Verfahren nach irgendeinem der vorherigen Ansprüche, **dadurch gekennzeichnet, daß** die natürliche Fettsäure und Methanol in einen Behälter (110) kontinuierlich eingelegt werden.

9. Verfahren nach Anspruch 8, **dadurch gekennzeichnet, daß** der Schritt von Bestrahlung des zuvor erhaltenen Reaktionsgemisches mit Mikrowellen in einem Rohr (110a) stattfindet, während das Reaktionsgemisch durchfließt.

10. Verfahren nach Anspruch 8 oder 9, **dadurch gekennzeichnet, daß** das erhaltene Produkt, biologischer Kraftstoff, kontinuierlich abgelassen wird.

11. Verfahren nach Anspruch 9, **dadurch gekennzeichnet, daß** der Schritt von Bestrahlung des Reaktionsgemisches mit Mikrowellen unter Verwendung von Mikrowellenerzeugern (18) für parallele und konvergente Wellen durchgeführt wird, wobei die Erzeuger Wellenleiter (15) aufweisen und gemäß der RIMM-Technologie hergestellt werden.

12. Vorrichtung zur Herstellung von biologischen Kraftstoffen ausgehend von einer natürlichen Fettsäure und Methanol, umfassend:
einen Behälter (1; 10; 110), in den die natürliche Fettsäure, Methanol und Natriummethylat zum Erhalten eines Gemisches eingelegt werden;
mindestens einen Mikrowellengenerator (11, 18) mit Wellenleitern (15) zur Bestrahlung des Gemisches;
**dadurch gekennzeichnet ist, daß** der Behälter ein Rückflusskühler ist.

13. Vorrichtung nach Anspruch 12, **dadurch gekennzeichnet, daß** sie Rührmittel (9; 17; 117) zur Förderung des Produktvermischens im Behälter (1; 10; 110) und zur gleichmäßigeren Bestrahlung umfasst.

14. Vorrichtung nach Anspruch 12, **dadurch gekennzeichnet, daß** sie ein Entzugrohr (7) zur kontinuierlichen Probenentnahme von der Flüssigkeit zur Reaktionssteuerung umfasst.

15. Vorrichtung nach Anspruch 12, **dadurch gekennzeichnet, daß** sie einen Reaktionstemperaturmesser (5, 5a) umfasst, der wiederum ein Thermostat ist, der an mindestens einem Mikrowellengenerator (11, 18) arbeitet, um ihn auszuschalten, wenn die Temperatur zu hoch wird.

16. Vorrichtung nach Anspruch 12, **dadurch gekennzeichnet, daß** sie einen Rückflusskühler (6) mit breiter Öffnung für den hohen Fluss von Methanoldampf, der durch die Mikrowellen erzeugt wird, umfasst.

17. Vorrichtung nach Anspruch 12, **dadurch gekennzeichnet, daß** der Behälter (10) einen Zylinder (10a) und einen Deckel (10b) oben auf dem Behälter (10) umfasst.

18. Vorrichtung nach Anspruch 17, **dadurch gekennzeichnet, daß** der Deckel (10b) eine Öffnung (13) zum Einlegen von Produkten für die Reaktion und der Mikrowellenerzeuger (11) umfasst.

19. Vorrichtung nach Anspruch 17, **dadurch gekennzeichnet, daß** am Boden des Behälters (10) ein Loch (19) zum Ablassen der behandelten Produkte vorgesehen ist.

20. Vorrichtung nach Anspruch 18, **dadurch gekennzeichnet, daß** die Mikrowellenerzeuger (11) Wellenleiter (15, 16) umfassen, dessen Ablass zum Rand des Behälters (10) abgewinkelt ist und in einem sich von dem Deckel (10b) erstreckenden Mittelgehäuse (14) positioniert ist, das die Bestrahlung von der Mitte des Behälters (10) zum Außenrand mit einer gleichmäßigeren Mikrowelleneindringung der Produkte erlaubt.

21. Vorrichtung nach irgendeinem der Ansprüche 12 bis 20, **dadurch gekennzeichnet, daß** die untere Hälfte des Behälters (10) mindestens einen Mikrowellenerzeuger (10) mit halbkreisförmigen Wellenleitern umfasst, der gemäß der RIMM-Technologie zur verbesserten Mikrowellenleistung hergestellt wird, umfasst.

22. Vorrichtung nach Anspruch 12, **dadurch gekennzeichnet, daß** abwärts von dem Behälter (110) sie ein Bestrahlungsrohr (110a) umfasst, in dem die Reagenzien kontinuierlich durchfließen und in dem Mikrowellenerzeuger (118) vorgesehen sind, wobei die letzteren Wellenleiter (115) aufweisen und gemäß der RIMM-Technologie hergestellt werden.

23. Vorrichtung nach Anspruch 22, **dadurch gekennzeichnet, daß** sie eine Pumpe (25) zur kontinuierlichen Übertragung der Reagenzien von dem Behälter (110) zum Bestrahlungsrohr (110a) umfasst.

## Revendications

1. Procédé pour la préparation de carburants biologiques à partir d'au moins un acide gras naturel, comprenant les étapes suivantes:
charger au moins un acide gras naturel, méthanol et un catalyseur dans un récipient (1; 10; 110) pour obtenir un mélange de réaction;
irradier le mélange de réaction obtenu auparavant avec micro-ondès,
le procédé étant **caractérisé en ce que**
ledit catalyseur est méthylate de sodium et que ladite étape d'irradiation aux micro-ondes cause la formation de radicaux réactifs comme produits intermédiaires; et que lesdits radicaux réactifs sont estérifiés pour former lesdits carburants biologiques.

2. Procédé selon la revendication 1, **caractérisé en ce que** l'acide gras naturel est choisi des glycérides naturels.

3. Procédé selon la revendication 1, **caractérisé en ce que**, avant l'étape d'estérification, il comprend une étape d'hydrolysation de l'acide gras naturel par irradiation avec micro-ondes et avec la formation de produits intermédiaires actifs obtenus des glycérides et du catalyseur.

4. Procédé selon une quelconque des revendications précédentes, **caractérisé en ce que** le catalyseur comprend en outre une substance choisie du groupe comprenant oxyde d'aluminium, alumine acide et sodium.

5. Procédé selon une quelconque des revendications précédentes, **caractérisé en ce que** l'acide gras naturel est huile d'arachide.

6. Procédé selon la revendication 1, **caractérisé en ce que** l'acide gras naturel est un acide gras libre.

7. Procédé selon la revendication 6, **caractérisé en ce que** le catalyseur est une montmorillonite basique.

8. Procédé selon une quelconque des revendications précédentes, **caractérisé en ce que** l'acide gras naturel et du méthanol sont chargés dans un récipient (110) de façon continue.

9. Procédé selon la revendication 8, **caractérisé en ce que** l'étape d'irradiation du mélange de réaction obtenu auparavant avec micro-ondes a lieu dans un tuyau (110a) pendant le passage du mélange de réaction.

10. Procédé selon la revendication 8 ou 9, **caractérisé en ce que** le produit obtenu, carburant biologique, est extrait de façon continue.

11. Procédé selon la revendication 9, **caractérisé en ce que** l'étape d'irradiation du mélange de réaction avec micro-ondes est atteinte en utilisant des générateurs de micro-ondes (18) pour ondes parallèles et convergentes, les générateurs ayant des guides d'ondes (15) et étant réalisés selon la technologie RIMM.

12. Dispositif pour la préparation de carburants biologiques à partir d'un acide gras naturel et méthanol, comprenant;
un récipient (1; 10; 110) dans lequel l'acide gras naturel, méthanol et méthylate de sodium sont chargés pour obtenir un mélange;
au moins un générateur de micro-ondes (11, 18), avec des guides d'ondes (15) pour irradier le mélange;
**caractérisé en ce que** le récipient est un condenseur à reflux.

13. Dispositif selon la revendication 12, **caractérisé en ce qu'**il comprend des moyens d'agitation (9; 17; 117) aptes à aider le mélange du produit dans le récipient (1; 10; 110) et pour une irradiation plus uniforme.

14. Dispositif selon la revendication 12, **caractérisé en ce qu'**il comprend un tuyau de prélèvement (7) pour échantillonner de façon uniforme le liquide afin de contrôler la réaction.

15. Dispositif selon la revendication 12, **caractérisé en ce qu'**il comprend un dispositif de mesurage de la température (5, 5a) étant à la fois un thermostat actif sur au moins un générateur de micro-ondes (11, 18), afin de le désactiver lorsque la température devient trop élevée.

16. Dispositif selon la revendication 12, **caractérisé en ce qu'**il comprend un condenseur à reflux (6) à ouverture large pour le grand flux de vapeur de méthanol produite par les micro-ondes.

17. Dispositif selon la revendication 12, **caractérisé en ce que** le récipient (10) comprend un cylindre (10a) et un couvercle (10b) sur le récipient (10).

18. Dispositif selon la revendication 17, **caractérisé en ce que** le couvercle (10b) comprend une ouverture (13) pour l'introduction de produits pour la réaction et des générateurs de micro-ondes (11).

19. Dispositif selon la revendication 17, **caractérisé en ce que** à la base du récipient (10) il est prévu un trou (19) pour l'extraction des produits traités.

20. Dispositif selon la revendication 18, **caractérisé en ce que** les générateurs de micro-ondes (11) comprennent des guides d'ondes (15, 16) dont la sortie est disposée en angle vers le bord du récipient (10) et positionnée dans un logement central (14) s'étendant du couvercle (10b), permettant l'irradiation du centre du récipient (10) vers le bord extérieur avec une pénétration plus homogène des micro-ondes dans les produits.

21. Dispositif selon une quelconque des revendications 12 à 20, **caractérisé en ce que** la moitié inférieure du récipient (10) comprend
au moins un générateur de micro-ondes (18) avec guides d'ondes semi-circulaires, étant réalisé selon la technologie RIMM pour une puissance des micro-ondes améliorée.

22. Dispositif selon la revendication 12, **caractérisé en ce que**, en aval du récipient (110), il comprend un tuyau d'irradiation (110a) dans lequel les réactifs passent de façon continue et dans lequel il est prévu des générateurs de micro-ondes (118), ces derniers ayant des guides d'ondes (115) et étant réalisés avec la technologie RIMM.

23. Dispositif selon la revendication 22, **caractérisé en ce qu'**il comprend une pompe (25) apte à transférer de façon continue les réactifs du récipient (110) au tuyau d'irradiation (110a).
